(19) Europäisches Patentamt
European Patent Office
Office européen des brevets

(11) **EP 4 738 496 A1**

(12) **EUROPEAN PATENT APPLICATION**
published in accordance with Art. 153(4) EPC

(43) Date of publication:
**06.05.2026 Bulletin 2026/19**

(21) Application number: **24863164.0**

(22) Date of filing: **03.09.2024**

(51) International Patent Classification (IPC):
***H01M 10/04*** *(2006.01)*    ***G01N 21/88*** *(2006.01)*

(52) Cooperative Patent Classification (CPC):
**G01N 21/88; H01M 10/04;** Y02E 60/10; Y02P 70/50

(86) International application number:
**PCT/KR2024/013263**

(87) International publication number:
**WO 2025/053583 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.09.2023   KR 20230119056**

(71) Applicant: **LG Energy Solution, Ltd.
Seoul 07335 (KR)**

(72) Inventors:
• **LIM, Sung Mook
  Daejeon 34122 (KR)**
• **KIM, Min Su
  Daejeon 34122 (KR)**
• **CHOI, Ee Beom
  Daejeon 34122 (KR)**

(74) Representative: **BCKIP Part mbB
Landsberger Straße 98
80339 München (DE)**

(54) **METHOD FOR MANUFACTURING SECONDARY BATTERY**

(57)    Example embodiments of the present technology provide a secondary battery manufacturing method. The secondary battery manufacturing method includes inspecting an electrode sheet to collect coordinate-related inspection data, which includes an evaluation value indicating a defect of the electrode sheet and coordinates matching the evaluation value, cutting the electrode sheet into first and second separate electrode sheets, winding the first and second separate electrode sheets into first and second separate electrode rolls, and determining outputs of the first and second separate electrode sheets.

[FIG. 4]

EP 4 738 496 A1

**Description**

[Technical Field]

The present invention relates to a secondary battery manufacturing method. The present application claims the benefit of priority based on Korean Patent Application No. 10-2023-0119056, filed on September 7, 2023, and the entire contents of the Korean patent application is incorporated herein by reference

[Background Art]

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A secondary battery is manufactured by an electrode process, an assembly process, and an activation process. Among these processes, the electrode process is a key process in determining the yield and performance of a battery cell. The electrode process may include a coating process, a roll press process, and a slitting process. In the coating process, an active material and an insulation material may be applied to a surface of a current collector. In the roll press process, an electrode may be pressed by pressing rolls. In the roll press process, a density, performance and surface quality of the electrode may be determined. In the slitting process, the electrode may be cut into a plurality of electrodes according to the design of battery cells.

[Disclosure]

[Technical Problem]

The present invention is directed to providing a secondary battery manufacturing method using a roll map including information about quality and defects in an electrode manufacturing process.

[Technical Solution]

Example embodiments of the present invention provide a secondary battery manufacturing method. The secondary battery manufacturing method includes inspecting an electrode sheet to collect coordinate-related inspection data, which includes an evaluation value indicating a defect of the electrode sheet and coordinates matching the evaluation value, cutting the electrode sheet into first and second separate electrode sheets, winding the first and second separate electrode sheets into first and second separate electrode rolls, and determining outputs of the first and second separate electrode sheets.

The outputs of the first and second separate electrode sheets may be respectively determined based on first and second winding amounts that are lengths of the first and second separate electrode sheets wound into the first and second separate electrode rolls.

The secondary battery manufacturing method may further include calculating amounts of exclusion of the first and second separate electrode sheets, and lengths of defective parts of the first and second separate electrode sheets may be respectively added to the amounts of exclusion of the first and second separated electrode sheets.

The length of the defective part of the electrode sheet may be calculated based on the coordinate-related inspection data.

Lengths of parts of the first and second separate electrode sheets that are removed for sample inspection may be added to the amounts of exclusion.

The secondary battery manufacturing method may further include calculating amounts of good-quality products that are lengths of normal parts of the first and second separate electrode sheets, based on the outputs and the amounts of exclusion.

The amounts of good-quality products may be calculated by subtracting the amounts of exclusion from the outputs.

Example embodiments provide a secondary battery manufacturing method. The secondary battery manufacturing method includes collecting coordinate-related inspection data of an electrode sheet, cutting the electrode sheet into first and second separate electrode sheets, and calculating amounts of good-quality products that are lengths of normal parts of the first and second separate electrode sheets, based on outputs, amounts of defects, and losses of the first and second separate electrode sheets, in which the amounts of defects are lengths of defective parts of the first and second separate electrode sheets, the losses are amounts of lost parts of the first and second separate electrode sheets, the coordinate-related inspection data includes an evaluation value indicating a defect of the electrode sheet and coordinates matching the evaluation value, and the amounts of defects are determined based on the coordinate-related inspection data.

The losses may be determined based on manual input data that is input by an operator.

Lengths of parts of the first and second separate electrode sheets that are lost due to sample inspection and removal of residual quantity may be added to the losses.

The outputs of the first and second separate electrode sheets may be respectively determined based on first and second winding amounts that are lengths of the first and second separate electrode sheets wound into first and second separate electrode rolls.

The amounts of good-quality products may be calculated by subtracting the amounts of defects and the losses from the outputs.

[Advantageous Effects]

Example embodiments of the present invention provide a secondary battery manufacturing method capable of enabling feedback, feedforward, and tracking of an electrode process.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

[Brief Description of the Drawings]

FIG. 1 illustrates a secondary battery manufacturing system according to example embodiments.

FIG. 2 is a plan view of an electrode sheet.

FIG. 3 illustrates first and second separate electrode sheets.

FIG. 4 is a flowchart of a secondary battery manufacturing method according to example embodiments.

FIG. 5 illustrates a picture on a client device.

FIG. 6 illustrates a secondary battery manufacturing system according to other example embodiments.

[Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

(First Embodiment)

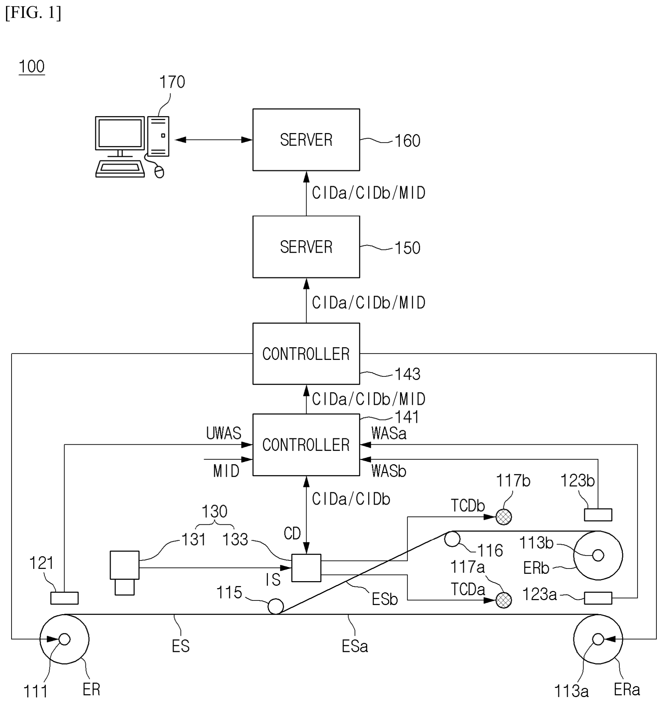

FIG. 1 illustrates a secondary battery manufacturing system according to example embodiments.

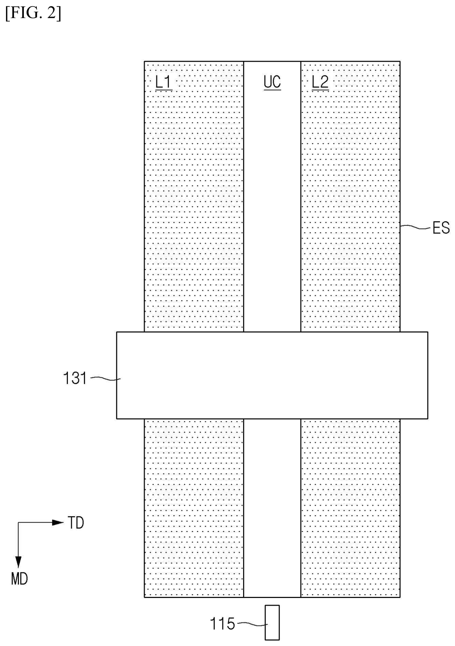

FIG. 2 is a plan view of an electrode sheet ES.

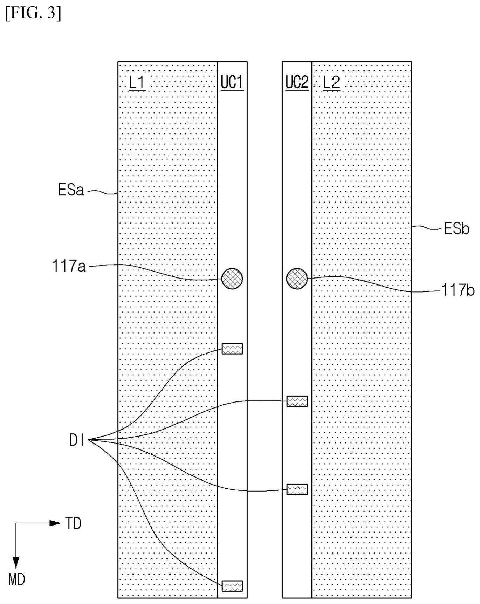

FIG. 3 illustrates first and second separate electrode sheets ESa and ESb.

Referring to FIGS. 1 to 3, the secondary battery manufacturing system 100 may include an unwinder 111, first and second rewinders 113a and 113b, a slitter 115, a rotary encoder 121, first and second rotary encoders 123a and 123b, an inspector 130, a first controller 141, a second controller 143, servers 150 and 160, and a client device 170.

The unwinder 111 may be configured to unwind the electrode sheet ES from an electrode roll ER. The first and second separate electrode sheets ESa and ESb are provided by cutting the electrode sheet ES. The first separate electrode sheet ESa may be wound into a first separate electrode roll ERa by the first rewinder 113a, and the second separate electrode sheet ESb may be wound into a second separate electrode roll ERb by the second rewinder 113b. Accordingly, the electrode sheet ES and the first and second separate electrode sheets ESa and ESb may be moved between the unwinder 111 and the first and second rewinders 113a and 113b.

The electrode roll ER may be provided by a coating process and a roll pressing process. The coating process is a process of applying a coating material such as an electrode slurry to the electrode sheet ES. The electrode slurry may include an electrode active material, a conductive agent, a binder, and a solvent. The electrode slurry may be provided by dissolving the electrode active material, the conductive additive, the binder, etc. in the solvent.

An electrode sheet may be coated with the electrode slurry by the coating process. The electrode sheet ES may include first and second coated lanes L1 and L2 and an uncoated part UC. The first and second coated lanes L1 and L2 may be parts of the electrode sheet ES on which the electrode slurry is provided (or which includes a coating of the electrode slurry). The uncoated part UC may be a part of the electrode sheet ES on which the electrode slurry is not provided (or that does not include the coating of the electrode slurry).

Each of the first and second coated lanes L1 and L2 and the uncoated part UC may extend in a machine direction MD, which is a moving direction (or a longitudinal direction), of the electrode sheet ES. The first and second coated lanes L1 and L2 and the uncoated part UC may be divided in a transverse direction TD (or a width direction) of the electrode sheet ES perpendicular to the machine direction MD of the electrode sheet ES. The first and second coated lanes L1 and L2 may be spaced apart from each other in the transverse direction TD with the uncoated part UC interposed therebetween.

In the roll press process, the electrode sheet ES coated with the electrode slurry may be passed through between pressing rolls. Through the roll pressing process, a surface of the electrode sheet ES may be planarized, and a binding force between an active material and a current collector on the electrode sheet ES be improved.

A slitting process may be performed on the electrode sheet ES. The electrode sheet ES may be cut into the first and second separate electrode sheets ESa and ESb by the slitter 115. The slitting process is performed on the electrode sheet ES unwound from the electrode roll ER and the first and second separate electrode sheets ESa and ESb to be wound into the first and second separate electrode rolls ERa and ERb and thus may be a roll-to-roll process.

The first separate electrode sheet ESa may include the first coated lane L1 and a first uncoated part UC1. The second separate electrode sheet ESb may include the second coated lane L2 and a second uncoated part UC2. As a non-limiting example, the first and second uncoated parts UC1 and UC2 may be provided by dividing the uncoated part UC of the electrode sheet ES.

A guide roll 116 may define a moving path of the second separate electrode sheet ESb. Although not shown in detail, the secondary battery manufacturing apparatus 100 may include additional guide rolls for defining moving paths of the electrode sheet ES and the first and second separate electrode sheets ESa and ESb. By arranging the additional guide rolls, driving paths of the electrode sheet ES and the first and second separate electrode sheets ESa and ESb may be designed, and tension of the electrode sheet ES may be maintained during processing of the electrode sheet ES and the first and second separate electrode sheets ESa and ESb.

The rotary encoder 121 may be configured to sense an amount of the electrode sheet ES unwound from the electrode roll ER by the unwinder 111. Accordingly, the rotary encoder 121 may be configured to generate an input amount signal UWAS indicating an unwinding amount of the electrode sheet ES. The rotary encoder 121 may be configured to transmit the input amount signal UWAS to the first controller 141. The first controller 141 may be configured to collect input amount data based on the input amount signal UWAS of the electrode sheet ES. The input amount data may represent a length of a material (i.e., the electrode roll ER) put into the secondary battery manufacturing system 100 to manufacture a secondary battery.

The first rotary encoder 123a may be configured to sense an amount of the first separate electrode sheet ESa wound into the first separate electrode roll ERa by the first rewinder 113a. Accordingly, the first rotary encoder 123a may be configured to generate a first exhaustion amount signal WASa indicating a winding amount of the first separate electrode sheet ESa. The first rotary encoder 123a may be configured to transmit the first exhaustion amount signal WASa to the first controller 141. The first controller 141 may be configured to collect first exhaustion amount data based on the first exhaustion amount signal WASa. The first exhaustion amount data may represent a length of the first separate electrode sheet ESa wound by the first rewinder 113a.

The second rotary encoder 123b may be configured to sense an amount of the second separate electrode sheet ESb wound into the second separate electrode roll ERb by the second rewinder 113b. Accordingly, the second rotary encoder 123b may be configured to generate a second exhaustion amount signal WASb indicating a winding amount of the second separate electrode sheet ESb. The second rotary encoder 123b may be configured to transmit the second exhaustion amount signal WASb to the first controller 141. The first controller 141 may be configured to collect second exhaustion amount data based on the second exhaustion amount signal WASb. The second exhaustion amount data may represent an amount of the second separate electrode sheet ESb wound by the second rewinder 113b.

As a non-limiting example, the first controller 141 and the second controller 143 may be programmable logic controllers (PLCs). A PLC is a special type of microprocessor-based controller that stores instructions using a programmable memory and implements functions such as logic, sequencing, timing, counting and arithmetic operations to control machines and processes. It is easy to operate and program the PLC.

The first and second controllers 141 and 143 may include a power supply, a CPU, an input interface, an output interface, a communication interface, and memory devices. The power supply may be configured to supply power to the other components of the first and second controllers 141 and 143, such as the CPU, the input interface, the output interface, the communication interface, and the memory devices, to operate the first and second controllers 141 and 143. The memory devices may include a read only memory (ROM) configured to store system programs such as operating systems, and a random access memory (RAM) configured to store data such as user programs, state information of input and output devices, and values of a timer, a counter, and other internal devices. The CPU may be configured to implement logic and control communication between modules that convert an input signal into an output operation signal. The CPU may operate based on a system program and a user program stored in the memory devices. The CPU may be configured to write or read inspection data and measurement data to or from data areas of the memory devices, based on the system program and the user program. Conditions or data of industrial devices and production processes may be transmitted to the CPU through an input module. A result of processing performed by the CPU may be transmitted to an actuator through an output module. The communication interface may be configured to transmit and receive data between the first and second controllers 141 and 143 or between the second controller 143 and the server 150.

However, embodiments are not limited thereto, and the first and second controllers 141 and 143 may each include one of a simple controller, a complex processor such as a microprocessor, a CPU or a GPU, a processor configured by software, dedicated hardware, and firmware. The first and second controllers 141 and 143 may be implemented, for example, by a general-purpose computer or application-specific hardware such as a digital signal processor (DSP), a field-programmable gate array (FPGA) or an application specific integrated circuit (ASIC).

The first controller 141 may be configured to collect coordinate data CDa and CDb of the first and second separate electrode sheets ESa and ESb based on the first and second exhaustion amount signals WASa and WASb. The first controller 141 may determine a moving distance of the first separate electrode sheet ESa based on the first exhaustion amount signal WASa and thus a position of a part of the first separate electrode sheet ESa wound by the first rewinder 113a on the first separate electrode sheet ESa at each time point when the slitting process is performed may be determined. The first controller 141 may determine a moving distance of the second separate electrode sheet ESb based on the second exhaustion amount signal WASb and thus a position of a part of the second separate electrode sheet ESb wound by the second rewinder 113b on the second separate electrode sheet ESb at each time point when the slitting process is performed may be determined.

The first coordinate data CDa may include coordinates matching parts of the first separate electrode sheet ESa. That is, each of arbitrary points on the first separate electrode sheet ESa may have a coordinate. The coordinates of the first coordinate data CDa may be one-dimensional (1D) quantities in the machine direction MD of the first separate electrode sheet ESa but are not limited thereto. The coordinates of the first coordinate data CDa may be two-dimensional (2D) quantities in the machine direction MD and the transverse direction TD.

The second coordinate data CDb may include coordinates matching parts of the second separate electrode sheet ESb. That is, each of arbitrary points on the second separate electrode sheet ESb may have a coordinate. The coordinates of the second coordinate data CDb may be 1D quantities in the machine direction MD of the second separate electrode sheet ESb but are not limited thereto. The coordinates of the second coordinate data CDb may be 2D quantities in the machine direction MD and the transverse direction TD.

The inspector 130 may be configured to inspect the electrode sheet ES to collect inspection data. The inspector 139 may include a color sensor, a joint sensor, a datum point sensor, or a vision machine.

For example, the inspection data may include data about the appearance of the electrode sheet ES collected by an image-based inspection device such as a vision machine, data about disconnections and joints of the electrode sheet ES, data about a part of the electrode sheet ES on which sampling inspection is performed, data about a part of the electrode sheet ES to be scrapped, data about a scrapped part of the electrode sheet ES, data about whether the coating material and an insulating layer on the electrode sheet ES are defective or not, data about datum points indicating a position on the electrode sheet ES, and defect data such as a pinhole defect, a crater defect, a line defect, a crack defect, a side ring defect, an island defect, a folded defect, a wrinkle defect, a pit defect, and a scratch defect. The inspection data may include an evaluation value for the quality of a part of the electrode sheet ES (e.g., a value indicating whether there is a defect or not and the type of defect) .

Here, the data of the appearance of the electrode sheet ES may include width data of the electrode sheet ES determined based on an image-based inspection, width data of the insulating layer on the electrode sheet ES, overlay data indicating an overlapping width between the coating material (i.e., the electrode slurry) and the insulating layer on the electrode sheet ES, and mismatch data indicating misalignment between coated lanes on the bottom surface ESB of the electrode sheet ES and coated lanes on the top surface EST of the electrode sheet ES. The datum points may be formed on the electrode sheet ES at certain intervals, and other elements on the electrode sheet ES may be located based on the datum points. As a non-limiting example, the secondary battery manufacturing system 100 may include a separate server configured to store original inspection data (e.g., an image of a defective part of the electrode sheet ES).

The inspection data may include width data of coated lanes and uncoated parts of the electrode sheet ES determined based on the image-based inspection, size data such as a width of the insulating layer and an overlapping width between the coating material and the insulating layer, mismatching data between coated lanes on a top surface of the electrode sheet ES and coated lanes on a bottom surface of the electrode sheet ES, and the like.

The inspector 130 may include a sensing part 131 and a processor 133. The sensing part 131 may be configured to sense physical quantity of the electrode sheet ES to generate a measurement signal MS. For example, the sensing part 131 may include a time delay and integration (TDI) camera, a complementary metal oxide semiconductor (CMOS) image sensor, a time-of-flight (TOF) sensor, etc. The sensing part 131 may include an emitter and a receiver that are configured to perform measurement using a non-destructive signal such as ultrasound waves, microwaves, terahertz waves, or infrared rays. The sensing part 131 may include analog and/or digital sensors, such as a biosensor, a chemical sensor, a composition sensor, a current and/or power meter, an air quality sensor, a gas sensor, a hall effect sensor, a brightness level sensor, and an optical sensor. The sensing part 131 may include a pressure sensor, a temperature sensor, an ultrasonic sensor, a proximity sensor, a door state sensor, a motion tracking sensor, a humidity sensor, a visible light and infrared sensor, a camera, etc.

The processor 133 may be configured to receive and process a raw inspection signal IS sensed by the sensing part 131 to collect inspection data. The processor 133 may include an algorithm for processing an image of a part of the electrode sheet ES to determine an inspection value of the inspection data or a model (e.g., an artificial neural network) trained to determine an inspection value based on the image of the part of the electrode sheet ES.

The inspection data may be time series data. The inspection data may be temporally ordered. The inspection data may be indexed by time. The inspection data may include evaluation values determined by the processor 133 and a time value (or time values) matching the evaluation values. That is, the inspection data may be stored based on a time point at which inspection is performed, and be related with time. The time values of the measurement data and the inspection data ID may be, for example, in the form of timestamp but are not limited thereto.

For example, the inspection data may include a value indicating a defect of each of the first and second coated lanes L1 and L2 and a time value related to the value indicating the defect. Here, the value indicating the defect should be understood to mean that the value include information about at least one of the presence of the defect and the type of the defect.

The first controller 141 may be in operative communication with the rotary encoder 121, the first and second rotary encoders 123a and 123b, the inspector 130, and additional measuring devices and inspectors through a wired or wireless data network. The data network may be unidirectional or bidirectional. The data network may be implemented by a physical channel, WiFi, public networks and/or specialized networks using Bluetooth or other frequency bands. The rotary encoder 121, the first and second rotary encoders 123a and 123b, the inspector 130, and the additional measuring devices and inspectors may be configured to collect data from equipment, a workpiece, an intermediate product, and a product in the secondary battery manufacturing system 100 or to generate a signal for collecting data therefrom. The first controller 141 may be configured to transmit the first and second coordinate data CDa and CDb to the processor 133.

The processor 133 may be configured to collect first and second coordinate-related inspection data CIDa and CIDb based on the inspection data and the first and second coordinate data CDa and CDb. The first coordinate-related inspection data CIDa may include an evaluation value indicating the presence or absence of a defect on the first coated lane L1 and the type of the defect, and a coordinate matching the evaluation value. The second coordinate-related inspection data CIDb may include an evaluation value indicating the presence or absence of a defect on the second coated lane L2 and the type of the defect, and a coordinate matching the evaluation value.

According to example embodiments, the processor 133 may be configured to calibrate the first and second coordinate data CDa and CDb based on a position of the sensing part 131. More specifically, the processor 133 may be configured to calibrate the first and second coordinate data CDa and CDb based on offset lengths so that coordinates of the first and second coordinate data CDa and CDb may be related to evaluation values of the inspection data. Here, the offset lengths may be a lengh of a part of the electrode sheet ES between the first and second rewinders 113a and 113b and a part of the electrode sheet ES sensed by the sensing part 131, and lengths of parts of the first and second separate electrode sheets ESa and ESb.

The inspector 130 may collect inspection data of a part of the electrode sheet ES corresponding to (e.g., a part of the electrode sheet ES overlapping) the sensing part 131, and the first and second coordinate data CDa and CDb are collected by the first and second rotary encoders 123a and 123b spaced apart from the sensing part 131. Accordingly, a part of the electrode sheet ES corresponding to the first and second coordinate data CDa and CDb collected at the same time point and a part of the electrode sheet ES corresponding to the inspection data may be different from each other.

According to example embodiments, the first and second coordinate data CDa and CDb collected at the same time as the inspection data may be calibrated based on an offset length, and the calibrated first and second coordinate data CDa and CDb may be related with measurement data to provide the first and second coordinate-related inspection data CIDa and CIDb. The coordinate-related inspection data CID may include evaluation values, and time values and coordinates matching the evaluation values. In the first and second coordinate-related inspection data CIDa and CIDb, each of the evaluation values may match a coordinate of one of the first and second separate electrode sheets ESa and ESb or may match a start coordinate and an end coordinate defining a section of each of the first and second separate electrode sheets ESa and ESb.

The secondary battery manufacturing system 100 may further include a measuring device configured to measure a physical quantity of the electrode sheet ES, such as a loading of the electrode slurry on the electrode sheet ES or a thickness of the electrode sheet ES. The measuring device may include a sensing part configured to generate a measurement signal and a processor configured to process the measurement signal to generate coordinate-related measurement data. The generation of the coordinate-related measurement data may include matching the first and second coordinate data CDa and CDb to measurement data, and the first and second coordinate data CDa and CDb may be calibrated based on an offset distance of the sensing part of the measuring device to match the first and second coordinate data CDa and CDb to the measurement data. The processor of the measuring device may calculate an evaluation value for a measured section of an electrode sheet based on raw measurement data, and the evaluation value may be matched to a start coordinate and an end coordinate that define the measured section of the electrode sheet.

For example, when an amount of the measured coating material on the electrode sheet ES (e.g., a loading amount on the electrode sheet ES or a thickness of the electrode sheet ES) is in a set range including upper and lower limits, a corresponding part of the electrode sheet ES may be determined as a good-quality part. The corresponding part of the electrode sheet ES may be determined as defective, when the amount of the measured coating material on the electrode sheet ES (e.g., the loading amount on the electrode sheet ES or the thickness of the electrode sheet ES) is less than the lower limit or greater than the upper limit.

As another example, a measured value (or a representative value) that is in a first range may be determined as normal, a measured value (or a representative value) that is in a second range greater than the first range may be determined as excessive, a measured value (or a representative value) that is in a third range greater than the second range may be determined as very excessive, a measured value (or a representative value) that is in a fourth range less than the first range may be determined as insufficient, and a measured value (or a representative value) that is in a fifth range less than the fourth range may be determined as very insufficient.

Here, when a lower limit of the second range is greater than or equal to an upper limit of the first range, the second range is greater than the first range. Similarly, when an upper limit of the fourth range is less than or equal to a lower limit of the first range, the fourth range is less than the first range.

The processor 133 may be configured to generate first and second defect indication signals TCDa and TCDb based on the first and second coordinate-related inspection data CIDa and CIDb. The processor 133 may be configured to transmit the first defect indication signal TCDa to a first marker 117a. The processor 133 may be configured to transmit the second defect indication signal TCDb to a second marker 117b.

The first marker 117a may be configured to provide a defect indicator DI to the first separate electrode sheet 125a based on the first defect indication signal TCDa. The defect indicator DI may be provided to the first uncoated part UC1 of the first separate electrode sheet 125a.

The second marker 117b may be configured to provide the defect indicator DI to the second separate electrode sheet 125b based on the second defect indication signal TCDb. The defect indicator DI may be provided to the second uncoated part UC2 of the second separate electrode sheet 125b.

For example, the defect indicator DI may be a defect tag and a color thereof may be distinguished from a color of the electrode sheet ES. In this case, each of the first and second markers 117a and 117b may be a defect tag attacher.

As another example, the defect indicator DI may be a defect mark, include a symbol or be 1D or 2D barcode. In this case, each of the first and second markers 117a and 117b may be a printing device such as a laser printer or an ink printer.

The secondary battery manufacturing system 100 may further include an input device, such as a human machine interface (HMI), which allows data to be input manually by an operator. Alternatively, the secondary battery manufacturing system 10 may allow data to be input by an operator with an input tool, and a computer-based input of manufacturing data such as Excel file scraping. Manual input data MID may include, for example, a length, start coordinate and end coordinate of a part of the electrode sheet ES that is cut for sample inspection of the electrode sheet ES or a length, start coordinate and end coordinate of a part of the electrode sheet ES that is lost due to the replacement of a lot (i.e., due to the loading of a new electrode roll ER). The input device may be configured to transmit the manual input data MID to the first controller 141. Alternatively, the input device may transmit the manual input data MID to the second controller 143 or directly to the server 150.

The first controller 141 may be configured to transmit the first and second coordinate-related inspection data CIDa and CIDb and the manual input data MID to the second controller 143. The second controller 143 may be configured to transmit the first and second coordinate-related inspection data CIDa and CIDb and the manual input data MID to the server 150. However, embodiments are not limited thereto, and the first controller 141 may directly transmit the first and second coordinate-related inspection data CIDa and CIDb and the manual input data MID to the server 150.

The second controller 143 may be configured to control operations of the unwinder 111, the rewinder 113, and the slitter 115. The second controller 143 may be configured to generate a signal for operating or stopping the unwinder 111, the rewinder 113, and the slitter 115. The signal for operating or stopping the unwinder 111, the rewinder 113, and the coaters 115T and 115B may be generated based on the first and second coordinate-related inspection data CIDa and CIDb and the manual input data MID.

The first and second coordinate-related inspection data CIDa and CIDb and the manual input data MID may be transmitted to the server 160 via the server 150. The server 150 may be, for example, a server for log data-based communication. The server 150 may be a program for communication between the second controller 143 and the server 160 for manufacturing management. The server 150 may be implemented by hardware. A language and protocol of the server 160 may be different from a language and protocol of the second controller 143. For example, the language of the server 160 may be SQL, and the language of the second controller 143 may be a ladder diagram.

The server 150 may be configured to convert electrode specification data transmitted from the server 160 into the language of the second controller 143. In addition, the server 150 may be configured to convert the first and second coordinate-related inspection data CIDa and CIDb and the manual input data MID into the language of the server 160, and write the first and second coordinate-related inspection data CIDa and CIDb and the manual input data MID to a database of the server 160.

The electrode specification data may include model information and a recipe of the electrode sheet ES. The electrode specification data may include all matters related to the processing of the electrode sheet ES, such as process conditions, including the number of lots to be processed in a current process, the number of coated lanes to be formed on the electrode sheet ES, temperature, humidity, pressure, etc., and process parameters, including a moving speed of the electrode sheet ES, a discharge amount of a coating die, pressure of pressure rolls, etc.

For control of a process, a communication line for connecting the second controller 143 and the server 160 via the server 150 may be installed between the second controller 143 and the server 160. Accordingly, data transmission through the second controller 143 may reduce resources required to install the communication line and enable efficient data processing and management, compared to a case in which the first and second rotary encoders 121 and 123 and the inspector 130 directly transmit the input amount signal UWAS, the exhaustion amount signal WS, and the first and second coordinate-related inspection data CIDa and CIDb to the server 150 and a case in which the first controller 141 directly transmits the first and second coordinate-related inspection data CIDa and CIDb to the server 160.

According to example embodiments, the server 160 may be a data processing system that supports all activities required to manage the manufacture of a secondary battery, such as work schedule management, work instructions, quality control, and work performance aggregation. The server 160 may be, for example, a manufacturing execution system (MES). The server 160 may be configured to perform inputting, processing, outputting, and communication of data necessary to perform an electrode manufacturing process, including the coating process, the roll pressing process, and the slitting process.

The server 160 may be configured to generate a roll map. The roll map may include data about specifications of a lot. The specifications of the lot may include, for example, a lot number, a length of the wound electrode sheet ES, a width of the electrode sheet ES, and materials and a composition used to process the electrode sheet ES.

The roll map may represent the electrode sheet ES based on coordinates indicating a position on the electrode sheet ES. As described above, a secondary battery manufacturing process may be performed on the electrode sheet ES. The roll map may include data that represents a history of processes performed on the electrode sheet ES and relates to coordinates. Accordingly, the roll map enables feedback, feedforward, and tracking of a secondary battery manufacturing process as described below.

The roll map may include event data indicating events of a roll-to-roll process of the electrode sheet ES. Generally, the event data is generated according to the progress of a process and thus is time series data. Accordingly, data of process events may include values indicating the events and time values matched thereto. The time series data may be temporally ordered. Temporal ordering is a main feature of time series data, and should be understood as organizing events in an order in which they occur and arrive to be processed. That is, the time series data may be stored based on a point in time when an event occurs (i.e., when inspection and measurement are performed or when an action of a process is performed), and the event may be matched to time values.

The manufacture of a secondary battery involves a series of different processes, and a leading process affects the following process. Feed forward should be hereinafter understood as correcting the following process based on data generated according to a result of the leading process. In this case, when time series data of the leading process does not directly match a workpiece, an intermediate product, and a product of the real world, it is difficult to reflect the time series data of the leading process in the following process. Here, the workpiece is an article provided as a result of each process, e.g., the electrode sheet ES of FIG. 1 on which the coating process, the roll press process, and the slitting process are performed, and the first and second separate electrode sheets ESa and ESb. The intermediate product may be one of separators cut by the notching process, electrodes, and an assembly thereof. The intermediate product may be a structure including a housing and an electrode assembly included in the housing (in some cases, the structure further includes an electrolyte). The product is an article processed by the activation process to be operable as a secondary battery. The above-described definitions of the workpiece, the intermediate product, and the product are definitions thereof only in one aspect and thus should not be understood as excluding general definitions thereof.

For feedforward, time series data should be related to positions on workpieces, components, intermediate products, and products of the real world. In the roll map, time series data such as measurement data may be related to the first and second coordinate data CDa and CDb based on the amount of movement (i.e., the amount of input or the amount of exhaustion) of the electrode sheet ES. The roll maps may allow time series data to be related with the first and second coordinate data CDa and CDb including coordinates of the positions on workpieces, the components, the intermediate products, and the products of the real-world. Accordingly, feedforward based on generation of the roll map and the roll map may improve the productivity and quality of a process by digitizing and objectifying aspects of the process that depend on an operator's discretion.

Roll maps may be generated in units of lots. The electrode sheet ES may be wound into the first and second separate electrode rolls ERa and ERb, and the first and second separate electrode rolls ERa and ERb may be cut to be separated from the first and second separate electrode sheets ESa and ESb connected to the first electrode roll ER when a target winding amount is reached. A lot is a production unit of the roll-to-roll process, and the first and second separate electrode sheets ESa and ESb and the second electrode roll ER2 are examples of lot. Accordingly, the server 160 may be configured to store a roll map of a previous process. The roll map of the previous process may correspond to the electrode roll ER. In addition, the server 160 may be configured to generate and store a roll map of a current process. The roll map of the current process may correspond to the first and second separate electrode rolls ERa and ERb.

A roll map of a preceding lot may be used to improve a process of a following lot, and this operation may be referred to as process feedback. The process feedback using the roll map may include identifying process conditions and process parameters that cause a problem and a defect, based on data included in the roll map.

Furthermore, roll maps may be cumulatively generated for workpieces, intermediate products, and products of unit processes to track process history of products (e.g., battery cells, battery modules, or battery packs) on the market. For example, a battery cell may include a cell identifier (ID) on an electrode assembly or a case. The cell ID may match lot numbers and coordinate information of electrodes and a separator included in the battery cell. In other words, the cell ID may be related to a roll map of the electrodes and the separator included in the battery cell. Accordingly, when an event such as a quality issue occurs in a battery cell on the market, a history of collective data of the manufacture of the battery cell may be retrieved based on the cell ID.

The server 160 may provide production management based on data of the roll map, such as the first and second coordinate-related inspection data CIDa and CIDb and the manual input data MID. The server 160 may be configured to determine or calculate, for example, an output, the amount of good-quality products, the amount of defects, and a loss in the coating process.

Here, an output of the slitting process may be determined based on the amount of winding by the first and second rewinders 123a and 123b. An output of the first separate electrode roll ERa may be a length of the first separate electrode sheet ESa that is wound by the first rewinder 123a and sensed by the first rotary encoder 123a. An output of the second separate electrode roll ERb may be a length of the second separate electrode sheet ESb that is wound by the second rewinder 123b and sensed by the second rotary encoder 123b.

The amount of good-quality products may be calculated by subtracting the amount of defects and the loss from the output. Accordingly, the relationship among the output, the amount of good-quality products, the amount of defects, and the loss may be expressed by Equation 1 below. Accordingly, the server 160 may be configured to automatically calculate the amount of good-quality products in the coating process as an example of production management.

[Equation 1]

$$\text{output} = \text{amount of good-quality products} + \text{amount of defects} + \text{loss}$$

Parts of the electrode sheet ES corresponding to the amount of defects and the loss may be removed in a subsequent process or separated from a normal part of the electrode sheet ES. The amount of defects and the loss may be referred to collectively as the amount of exclusion. That is, the amount of exclusion may satisfy Equations 2 and 3 below.

[Equation 2]

$$\text{amount of exclusion}=\text{amount of defects}+\text{amount of loss}$$

[Equation 3]

$$\text{output}-\text{amount of exclusion}=\text{amount of good-quality products}$$

As another example, according to example embodiments, the server 160 may be a statical process controller (SPC). The server 160 may manage the quality of processing the electrode sheet ES by continuously monitoring the processing of the electrode sheet ES based on original inspection data and/or measurement data. The server 160 may collect and analyze manufacturing data in almost real time to identify problematic conditions in a timely manner and provide a notification to an operator before potential problems occur.

As another example, the server 160 may be a data warehouse configured to store data of a roll map, such as the first and second coordinate-related inspection data CIDa and CIDb and the manual input data MID, for a long time.

The client device 170 may be configured to transmit an API request to the server 160 to inquire information about the roll map. The server 160 may be configured to transmit a uniform resource locator (URL) (or a schema) including a source code for displaying the roll map on the client device 170 to the client device 170 in response to the API request from the client device 170. The client device 170 may access source code for visualizing and displaying the roll map through the URL (or schema).

The client device 170 may be a device, e.g., a mobile device, such as a workstation computer, a laptop computer, a desktop computer, a tablet PC or a smart phone, or a wearable device, for communication with the server 160. The client device 170 may include input tools for inputting the API request and a display device displaying the roll map.

The processor 133 and the servers 150 and 160 may be implemented by hardware, firmware, software, or a combination thereof. For example, the processor 133 and the servers 150 and 160 may include a computing device such as a workstation computer, a desktop computer, a laptop computer, and a tablet computer. The processor 133 and the servers 150 and 160 may include a simple controller, a complex processor such as a microprocessor, a CPU, or a GPU, a processor configured by software, dedicated hardware, or firmware. The processor 133 and the servers 150 and 160 may be implemented, for example, by a general-purpose computer or application-specific hardware such as a digital signal processor (DSP), a field programmable gate array (FPGA), or an application specific integrated circuit (ASIC).

The servers 150 and 160 may include a physical server or a cloud server. The servers 150 and 160 may provide data and an analysis result to an operator through various frameworks. A framework may include a protocol supporting data transmission so that the client device 170 may visualize data through a user interface and provide updated visualization when new data is calculated by the server 160. The protocol supporting data transmission may include HTML, JavaScript, and/or JSON.

The servers 150 and 160 may include various types of application programming interfaces (APIs) for storing data in a database and other data management tools. The APIs may also be used to retrieve data from databases of various data management systems. The data management systems may provide access to a database, pull or retrieve data from the database, and generate metrics. Here, the metrics are a tool for visualizing data. The metrics may include measured values generated in a time-series manner and be used to monitor applications and generate a status warning.

According to some embodiments, the processor 133 and the servers 150 and 160 may be operated by instructions stored in a machine-readable medium that may be read and executed by one or more processors. Here, the machine-readable medium may include an arbitrary apparatus for storing and/or transmitting information in a form readable by a machine (e.g., a computing device). Examples of the machine-readable medium may include a read-only memory (ROM), a random access memory (RAM), a magnetic disk storage medium, an optical storage medium, a flash memory, electrical, optical, acoustic or other types of radio signals (e.g., carrier waves, infrared signals, digital signals, etc.), and other signals.

The processor 133 and the servers 150 and 160 may be configured by firmware, software, routines, and instructions for performing the above-described operation or a process described below. For example, the processor 133 and the servers 150 and 160 may be instantiated in a memory.

However, this is for the sake of convenience in explanation, and the above-described operations of the processor 133 and the servers 150 and 160 may also result from computing devices, distributed computing devices, processors, firmware, software, routines, and other devices executing routines, and instructions.

The secondary battery manufacturing system 100 may implement a plug-in architecture with an API for obtaining data to provide a plug-and-play connection between the inspector 130 and additional measuring devices and inspectors. Accordingly, resources in a certain process step and a specific site can be easily transferred to a different process and a different site or new resources can be easily introduced into each process step and each site.

A data network between the components of the secondary battery manufacturing system 100 may include various types of communication channels including unidirectional and bidirectional wired and wireless communications. For example, the data network may include an industrial protocol network such as OPC, Modbus, or ProfiNet. The communication channel may be a channel of dedicated conduit communication such as universal serial bus (USB), IEEE 802 (Ethernet), IEEE 1394 (FireWire), or other high-speed data communication standards.

An architecture configured to generate a roll map and an intermediate roll map may be implemented by adding only the first controller 141 to elements essential in a modern process management system. That is, a system according to example embodiments is capable of using resources of an already-installed manufacturing site and reducing additional capital expenditure. In addition, applying the same architecture as existing manufacturing equipment to newly constructed manufacturing equipment may lead to improvement of the reliability of the manufacture of a secondary battery, sensing/improvement of problematic processes, and effective introduction of new processes.

(Second Embodiment)

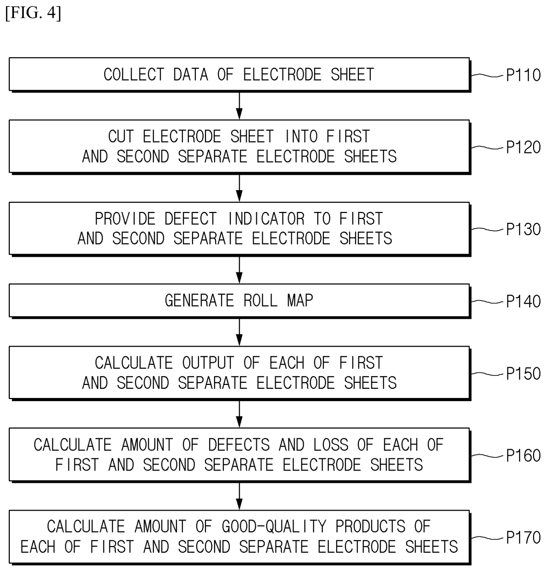

FIG. 4 is a flowchart of a secondary battery manufacturing method according to example embodiments.

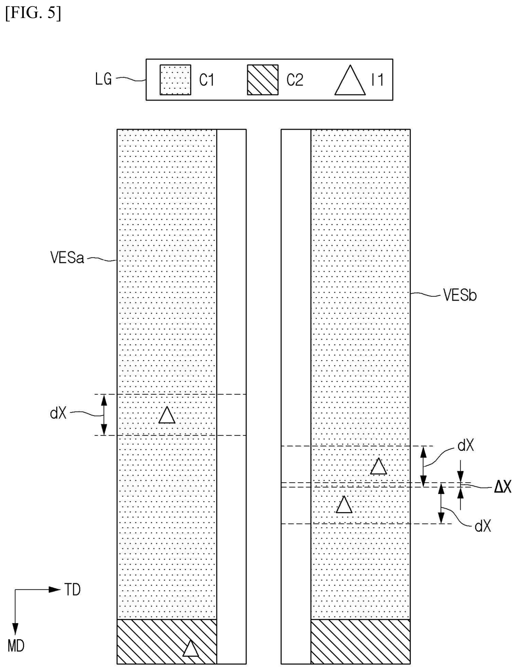

FIG. 5 illustrates a screen SCR displayed on the client device 170.

Referring to FIGS. 1, 2 and 4, in P110, data of the electrode sheet ES may be collected. The data of the electrode sheet ES may be data for evaluating the coating process performed on the electrode sheet ES. The data of the electrode sheet ES may be data for generating a roll map. The data of the electrode sheet ES may include coordinate-related data such as the first and second coordinate-related inspection data CIDa and CIDb and the manual input data MID. The data of the electrode sheet ES may be data for generating a roll map.

Referring to FIGS. 1, 3 and 4, in P120, the electrode sheet ES may be cut into the first and second separate electrode sheets ESa and ESb. The electrode sheet ES may be cut by a slitter.

Next, in P130, the defect indicator DI may be provided to the first and second separate electrode sheets ESa and ESb. The defect indicator DI may be provided by the first and second markers 117a and 117b. The first and second markers 117a and 117b may provide defect indicators DI to the first and second uncoated parts UC1 and UC2 of parts of the first and second separate electrode sheets ESa and Esb that include defects, based on the first and second defect indication signals TCDa and TCDb generated based on the first and second coordinate-related inspection data CIDa and CIDb.

Next, in P140, a roll map may be generated. The generation of the roll map may include collectively storing, processing, modifying, and transmitting the first and second coordinate-related inspection data CIDa and CIDb and the manual input data MID based on the coordinates thereof, and generating a URL to access them. The types of defects may be ordered spatially (i.e., based on the coordinates) by collectively storing, processing, modifying, and transmitting the first and second coordinate-related inspection data CIDa and CIDb and the manual input data MID. Accordingly, it is possible to prevent the lengths of parts of the electrode sheet ES corresponding to defects of the electrode sheet ES from being repeatedly added when the amount of the defects is calculated.

Next, in P150, an output of each of the first and second separate electrode sheets ESa and ESb may be calculated. The output of each of the first and second separate electrode sheets ESa and ESb may be determined based on the first and second winding amount signals WASa and WASb. The outputs of the first and second separate electrode sheets ESa and ESb may be a length of the first separate electrode sheet ESa wound by the first rewinder 113a and a length of the second separate electrode sheet ESb wound by the second rewinder113b, respectively.

Next, referring to FIGS. 1, 4, and 5, in P160, a loss and an amount of defects of each of the first and second separate electrode sheets ESa and ESb may be calculated.

The loss of each of the first and second separate electrode sheets ESa and ESb may be determined based on the manual input data MID. For example, lengths of **parts of** the first and second separate electrode sheets ESa and ESb **that are lost due to** sample inspection and removal of residual quantity may be added to the losses. The sample inspection and the removal of the residual quantity may be determined based on the manual input data MID.

Data of a roll map such as the first and second coordinate-related inspection data CIDa and CIDb and the manual input data MID may be visualized on a first visualized electrode sheet VESa and a second visualized electrode sheet VESb displayed on the screen SCR. More specifically, coordinate-related data of the first separate electrode sheet ESa including the first coordinate-related inspection data CIDa may be visualized on the first visualized electrode sheet VESa, and coordinate-related data of the secod separate electrode sheet ESb including the second coordinate-related inspection data CIDb may be visualized on the second visualized electrode sheet VESb.

As shown in a legend LG of FIG. 5, a first color C1 represents that parts of the first and second separate electrode sheets ESa and ESb are normal, and a second color C2 represents that parts of the first and second separate electrode sheets ESa and ESb are lost due to the sample inspection or the removal of the residual quantity. Symbols I1 having a hollow triangular shape represent defects of the first and second separate electrode sheets ESa and ESb determined based on appearance inspection performed on the first and second separate electrode sheets ESa and ESb by a vision machine or the like.

The amount of defects may be determined from parts of the first and second separate electrode sheets ESa and ESb that are not included in the calculation of the loss. For example, the parts added to the loss, such as parts marked in the second color C2, may not be added to the amount of defects even when defects are included in the parts.

For example, in FIG. 5, one of the symbols I1 of the first visualized electrode sheet VESa is included in the part marked in the second color C2 and thus the defect represented by the symbol I1 may not be added to the amount of defects. Accordingly, the amount of defects of the first visualized electrode sheet VESa illustrated in FIG. 5 may be dX.

Some defects may overlap in the transverse direction TD. Because the amount of defects is the sum of actual lengths of the parts of the first and second separate electrode sheets ESa and ESb that include defects, the actual lengths may not be added up redundantly even when some defects overlap in the transverse direction TD.

The symbols I1 of the second visualized electrode sheet VESb each have a defect length dx (or a distance to be cut to remove the defect) dX but are disposed adjacent to each other, thus causing overlapping of the lengths of the defects. Thus, the amount of defects of the second visualized electrode sheet VESb illustrated in FIG. 5 may be calculated by Equation 4 below.

[Equation 4]

$$\text{amount of defects} = dx + dx - \Delta X$$

As described above, based on the data of the roll map, the server 160 may be configured to determine the output, the amount of defects, and the amount of good-quality products of each of the first and second separate electrode sheets ESa and ESb, and the production performance (i.e., the amount of good-quantity products) of each of the first and second separate electrode sheets ESa and ESb may be determined automatically and with high precision.

Next, in P170, the amount of good-quality products of each of the first and second separate electrode sheets ESa and ESb may be calculated. The amount of good-quality products in the coating process may be calculated based on the output, the loss, and the amount of defects. More specifically, the amount of good-quality products in the coating process may be calculated by subtracting the amount of exclusion of the coating process (i.e., the sum of the loss and the amount of defects) from the output of the coating process.

(Third Embodiment)

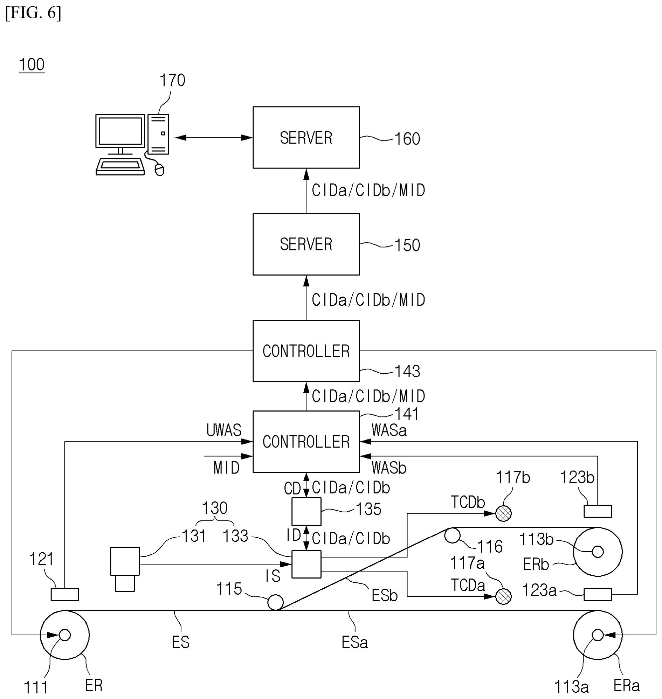

FIG. 6 illustrates a secondary battery manufacturing system 101 according to other example embodiments.

Referring to FIG. 6, the secondary battery manufacturing system 101 may include an unwinder 111, first and second rewinders 113a and 113b, a slitter 115, a rotary encoder 121, first and second rotary encoders 123a and 123b, an inspector 130, a processor 135, a first controller 141, a second controller 143, an input device 150, and servers 150 and 160.

The unwinder 111, the first and second rewinders 113a and 113b, the slitter 115, the rotary encoder 121, the first and second rotary encoders 123a and 123b, the inspector 130, the first controller 141, the second controller 143, the input device 150 and the servers 150 and 160 of the secondary battery manufacturing system 101 are substantially the same as those described above with reference to FIGS. 1 to 3, and thus redundant description thereof is omitted here.

The processor 135 may be an inspection master processor. The processor 135 may be configured to collect, process, modify, store, and transmit inspection data collected from additional inspectors in addition to the inspector 130. Accordingly, data collected in the secondary battery manufacturing system 100 may be easily handled, processed, modified, stored and transmitted.

In the present example, the processor 133 may collect inspection data ID, and the inspection data ID may be transmitted to the processor 135. The processor 135 may be configured to generate (or collect) first and second coordinate-related inspection data CIDa and CIDb based on first and second coordinate data CDa and CDb and inspection data transmitted from the first controller 141. The processor 135 may be configured to transmit the first and second coordinate-related inspection data CIDa and CIDb to the first controller 141 and the processor 133.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A secondary battery manufacturing method comprising:

   inspecting an electrode sheet to collect coordinate-related inspection data, the coordinate-related inspection data including an evaluation value indicating a defect of the electrode sheet and coordinates matching the evaluation value;
   cutting the electrode sheet into first and second separate electrode sheets;
   winding the first and second separate electrode sheets into first and second separate electrode rolls; and
   determining outputs of the first and second separate electrode sheets.

2. The secondary battery manufacturing method of claim 1, wherein
   the outputs of the first and second separate electrode sheets are respectively determined based on first and second winding amounts that are lengths of the first and second separate electrode sheets wound into the first and second separate electrode rolls.

3. The secondary battery manufacturing method of claim 1, further comprising

   calculating amounts of exclusion of the first and second separate electrode sheets,
   wherein lengths of defective parts of the first and second separate electrode sheets are respectively added to the amounts of exclusion of the first and second separated electrode sheets.

4. The secondary battery manufacturing method of claim 3, wherein
   the length of the defective part of the electrode sheet is calculated based on the coordinate-related inspection data.

5. The secondary battery manufacturing method of claim 3, wherein
   lengths of parts of the first and second separate electrode sheets that are removed for sample inspection are added to the amounts of exclusion.

6. The secondary battery manufacturing method of claim 5, further comprising
   calculating amounts of good-quality products that are lengths of normal parts of the first and second separate electrode sheets, based on the outputs and the amounts of exclusion.

7. The secondary battery manufacturing method of claim 6, wherein
   the amounts of good-quality products are calculated by subtracting the amounts of exclusion from the outputs.

8. A secondary battery manufacturing method comprising:

   collecting coordinate-related inspection data of an electrode sheet;
   cutting the electrode sheet into first and second separate electrode sheets; and
   calculating amounts of good-quality products that are lengths of normal parts of the first and second separate electrode sheets, based on outputs, amounts of defects, and losses of the first and second separate electrode sheets, wherein the amounts of defects are lengths of defective parts of the first and second separate electrode sheets and the losses are amounts of lost parts of the first and second separate electrode sheets,
   wherein the coordinate-related inspection data includes an evaluation value indicating a defect of the electrode sheet and coordinates matching the evaluation value, and
   the amounts of defects are determined based on the coordinate-related inspection data.

9. The secondary battery manufacturing method of claim 8, wherein
   the losses are determined based on manual input data that is input by an operator.

10. The secondary battery manufacturing method of claim 8, wherein
    lengths of parts of the first and second separate electrode sheets that are lost due to sample inspection and removal of residual quantity are added to the losses.

**11.** The secondary battery manufacturing method of claim 8, wherein
the outputs of the first and second separate electrode sheets are respectively determined based on first and second winding amounts that are lengths of the first and second separate electrode sheets wound into first and second separate electrode rolls.

**12.** The secondary battery manufacturing method of claim 8, wherein
the amounts of good-quality products are calculated by subtracting the amounts of defects and the losses from the outputs.

[FIG. 1]

100

EP 4 738 496 A1

[FIG. 2]

L1    UC    L2

ES

131

TD

MD

115

16

[FIG. 3]

[FIG. 4]

```
┌─────────────────────────────────────────────┐
│     COLLECT DATA OF ELECTRODE SHEET           │──── P110
└─────────────────────────────────────────────┘
                      │
                      ▼
┌─────────────────────────────────────────────┐
│        CUT ELECTRODE SHEET INTO FIRST         │──── P120
│     AND SECOND SEPARATE ELECTRODE SHEETS      │
└─────────────────────────────────────────────┘
                      │
                      ▼
┌─────────────────────────────────────────────┐
│       PROVIDE DEFECT INDICATOR TO FIRST       │──── P130
│     AND SECOND SEPARATE ELECTRODE SHEETS      │
└─────────────────────────────────────────────┘
                      │
                      ▼
┌─────────────────────────────────────────────┐
│              GENERATE ROLL MAP                 │──── P140
└─────────────────────────────────────────────┘
                      │
                      ▼
┌─────────────────────────────────────────────┐
│        CALCULATE OUTPUT OF EACH OF FIRST       │──── P150
│     AND SECOND SEPARATE ELECTRODE SHEETS      │
└─────────────────────────────────────────────┘
                      │
                      ▼
┌─────────────────────────────────────────────┐
│   CALCULATE AMOUNT OF DEFECTS AND LOSS OF EACH OF │──── P160
│     FIRST AND SECOND SEPARATE ELECTRODE SHEETS    │
└─────────────────────────────────────────────┘
                      │
                      ▼
┌─────────────────────────────────────────────┐
│   CALCULATE AMOUNT OF GOOD-QUALITY PRODUCTS OF    │──── P170
│ EACH OF FIRST AND SECOND SEPARATE ELECTRODE SHEETS │
└─────────────────────────────────────────────┘
```

[FIG. 5]

[FIG. 6]

## INTERNATIONAL SEARCH REPORT

| International application No. |
|---|
| **PCT/KR2024/013263** |

**A.    CLASSIFICATION OF SUBJECT MATTER**

**H01M 10/04**(2006.01)i; **G01N 21/88**(2006.01)i

According to International Patent Classification (IPC) or to both national classification and IPC

**B.    FIELDS SEARCHED**

Minimum documentation searched (classification system followed by classification symbols)

H01M 10/04(2006.01); H01M 10/42(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 좌표 (coordinate), 검사 (inspect), 전극 시트 (electrode sheet), 불량 (defect), 재단 (cut)

**C.    DOCUMENTS CONSIDERED TO BE RELEVANT**

| Category* | Citation of document, with indication, where appropriate, of the relevant passages | Relevant to claim No. |
|---|---|---|
| A | KR 10-2022-0093524 A (LG ENERGY SOLUTION, LTD.) 05 July 2022 (2022-07-05)<br>See abstract; and claim 1. | 1-12 |
| A | KR 10-2021-0048327 A (LG CHEM, LTD.) 03 May 2021 (2021-05-03)<br>See abstract; and claim 1. | 1-12 |
| A | JP 5911544 B2 (CKD CORP.) 27 April 2016 (2016-04-27)<br>See claim 1; and figure 1. | 1-12 |
| A | JP 6676573 B2 (CKD CORP.) 08 April 2020 (2020-04-08)<br>See claim 1; and figure 1. | 1-12 |
| A | JP 2015-133259 A (TOYOTA MOTOR CORP.) 23 July 2015 (2015-07-23)<br>See abstract; claim 1; and figure 2. | 1-12 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 December 2024** | **04 December 2024** |

| Name and mailing address of the ISA/KR | Authorized officer |
|---|---|
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| International application No. |
| --- |
| **PCT/KR2024/013263** |

| Patent document cited in search report | | | Publication date (day/month/year) | Patent family member(s) | | | Publication date (day/month/year) |
| --- | --- | --- | --- | --- | --- | --- | --- |
| KR | 10-2022-0093524 | A | 05 July 2022 | CN | 115336079 | A | 11 November 2022 |
| | | | | EP | 4109624 | A1 | 28 December 2022 |
| | | | | US | 2023-0349834 | A1 | 02 November 2023 |
| | | | | WO | 2022-145905 | A1 | 07 July 2022 |
| KR | 10-2021-0048327 | A | 03 May 2021 | KR | 10-2670908 | B1 | 29 May 2024 |
| JP | 5911544 | B2 | 27 April 2016 | JP | 2014-239074 | A | 18 December 2014 |
| JP | 6676573 | B2 | 08 April 2020 | CN | 108695559 | A | 23 October 2018 |
| | | | | CN | 108695559 | B | 18 June 2021 |
| | | | | JP | 2018-170104 | A | 01 November 2018 |
| JP | 2015-133259 | A | 23 July 2015 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230119056